# EUROPEAN PATENT APPLICATION

(11) **EP 2 172 854 A1**
(43) Date of publication of application: **07.04.2010**
(21) Application number: 08017385.9
(22) Date of filing: 02.10.2008
(51) Int. Cl.: G06F 17/30, G06Q 30/00

(54) **At least partially automised providing of information for the use by a terminal operable in a communication network**

(71) Applicant: Vodafone Holding GmbH, 40213 Düsseldorf (DE)
(72) Inventor: Lee, Sabrina, 40219 Düsseldorf (DE); Hartl, Mike, 40878 Ratingen (DE)
(74) Representative: Ring & Weisbrodt

(57) **Abstract**

The present invention relates to a method for the at least partially automatised provision of information, in particular service information and/or advertising information for goods and/or services for the use by a terminal operable in a communication network, which method is characterized by the following process steps carried out by a service device of the communication network:
a) gathering at least one message containing individualized information of a user;
b) indexing the words contained in the gathered message;
c) determining key words by means of the indexed words;
d) generating at least one search inquiry using at least a part of the determined key words;
e) sending the search inquiry to at least one database unit and/or at least one search machine unit;
f) receiving at least one reply to the search inquiry
g) sending at least one reply to at least one terminal of the user.

Furthermore, the present invention relates to a method for the at least partially automatised provision of information, in particular service information and/or advertising information for goods and/or services for the use by a terminal operable in a communication network is proposed, which method is characterized by the following process steps carried out by a terminal of a user:
a) generating at least one message containing individualized information;
b) sending the message to a service device of the communication network;
c) receiving at least one replay message from the service device.

The subject of the invention is furthermore a service device in a communication network, preferably a mobile network according to a GSM, GPRS and/or UMTS radio network standard, which service device is at least partially involved in an at least partially automatised provision of information, in particular service information and/or advertising information for goods and/or services for the use by means of a terminal operable in the communication network, which service device is designed and/or adapted to at least partially carry out a method according to the invention.

The subject of the invention is furthermore a terminal to be operated in a communication network, preferably a mobile network according to a GSM, GPRS and/or UMTS radio network standard, which terminal is designed and/or adapted to at least partially carry out a method according to the invention.

## Description

The present invention relates to a method for providing information, in particular service information and/or advertising information for goods and/or services in an at least partially automatised way, for the use by a terminal operable in a communication network.

The subject of the present invention is furthermore a service device in a communication network, preferably a mobile network according to a GSM, GPRS and/or UMTS radio network standard, which service device is at least partially involved in an at least partially automatised providing of information, in particular service information and/or advertising information for goods and/or services, for the use by a terminal operable in a communication network and is designed and/or adapted to at least partially carry out a method according to the invention.

The subject of the present invention is furthermore a terminal to be operated in a communication network, preferably a mobile network according to a GSM, GPRS and/or UMTS radio network standard, which is designed and/or adapted to at least partially carry out a method according to the invention.

In the state of the art, numerous methods, systems and devices for providing information, which can be used by means of a terminal operable in the communication network, are known, for example from WO 2007/033358 A2.

The hitherto known solutions do not satisfy or hardly satisfy the permanently existent demand for new and improved solutions for the at least partially automatised provision of information, in particular service information and/or advertising information for goods and/or services for the use by a terminal operable in a communication network. There is still a demand for improvements in particular with respect to the realization of automatised assistant services and/or such services that support the user, for example assistance in shopping, fixing and/or coordination of appointments.

On this base the present invention proposes a method for the at least partially automatised provision of information, in particular service information and/or advertising information for goods and/or services for the use by a terminal operable in a communication network, which method is characterized by the following process steps carried out by a service device of the communication network:
a) gathering at least one message containing individualized information of a user;
b) indexing the words contained in the gathered message;
c) determining key words by means of the indexed words;
d) generating at least one search inquiry using at least a part of the determined key words;
e) sending the search inquiry to at least one database unit and/or at least one search machine unit;
f) receiving at least one reply to the search inquiry
g) sending at least one reply to at least one terminal of the user.

For the technical solution of the problem, furthermore a method for the at least partially automatised provision of information, in particular service information and/or advertising information for goods and/or services for the use by a terminal operable in a communication network is proposed, which method is characterized by the following process steps carried out by a terminal of a user:
a) generating at least one message containing individualized information;
b) sending the message to a service device of the communication network;
c) receiving at least one replay message from the service device.

The invention is based upon the knowledge that thanks to the proceeding of the method according to the invention, it is possible to realize an at least partially automatised assistant service comprising extended utilization functionalities. According to the invention, users thus get the possibility to acquire and/or to collect individually interesting or individually needed information in an automatised manner.

The solution according to the invention enables the user for example to memorize a message containing individualized information, for example a reminder of hiring a car for a trip to Munich on March 15, by means of the service device of the communication network in a manner similar to a note on a piece of paper. The words contained in the message gathered by the service device will then be indexed and corresponding key words will be determined from the indexed words, in the present case for example the words contained in the gathered message with respect to the hiring of a car. Based upon the key words, a search inquiry will then be generated by the service device and be sent to at least one database unit and/or one search machine unit, in the present case for example an inquiry for car hire services and/or offers for a corresponding hiring of a car for a trip to Munich on March 15. Results determined by a database unit or a search machine unit in response to the search inquiry are then transmitted by the respective database unit or a search machine unit as reply to the service device and from this one to a terminal of the user. Thus, the user himself does not have to prepare, enter and/or send the corresponding search queries to a database unit or a search machine unit.

Advantageously, a search inquiry that is anonymous with respect to the user is generated within the scope of the generation of a search inquiry carried out in process step d), in particular such that no conclusions with respect to the identity and/or personal information concerning the user, in particular the name or contact information, can be drawn by the database unit and/or the search machine unit. Thus, the service device according to the invention advantageously enables an anonymous acquisition of information and/or provision of information, which in particular respects an existing or requested need of confidence of users with respect to individual information.

Another advantageous embodiment of the invention provides that the search inquiry is generated in consideration of user individual preconditions and/or preferences. Advantageously, an assistant service according to the invention can thus be further improved and further individualized, in particular with respect to the needs of the user, advantageously such that users can use or employ the assistant service according to the invention more often, to a larger extend and more naturally.

Another embodiment of the invention provides that a search inquiry that allows a semantic search is generated, preferably a search query or a search inquiry in a RDF, XML and/or OWL format.

Another advantageous embodiment of the invention is characterized by a selection of the database unit and/or the search machine unit in consideration of preconditions and/or preferences of the service device and/or the user. Thanks to these measures, taken individually and/or in combination with each other, one can obtain a further improvement of assistant services according to the invention.

In an especially advantageous embodiment of the invention, the service device comprises at least one administrable interface for the connection of database units and/or search machine units. The interface according to the invention advantageously permits a purposeful connection of database units and/or search machine units of third providers. Thus, the provider of a service device according to the invention can advantageously include database units and/or search machine units operated or provided by third providers into the provision of information according to the invention by paying a charge. Advantageously, corresponding third providers are providers who offer or carry out service information and/or advertising information for goods and/or services, for which providers the service device quasi provides an access platform to possible customers. The service device according to the invention advantageously enables or supports the execution of corresponding transactions between the users and the third providers, in particular with respect to the order, the delivery and/or the payment of corresponding goods or services.

In another embodiment of the invention, received replies are edited in process step f) and at least one edited reply is sent to a terminal of the user in process step g). Within the scope of the edition of received replies, a filtering of the replies with respect to user individual preconditions and/or preferences is advantageously carried out. Thus, an assistant service according to the invention is advantageously further improved, in particular since users do thus not receive all replies, but only replies that are interesting or relevant for them.

Another advantageous embodiment of the invention provides that the message containing individualized information is generated by a voice entry by means of the terminal of the user and/or by a text entry by means of the terminal of the user and is sent by the terminal via the communication network to the service device for being gathered by the service device according to process step a), preferably by means of a message service of the communication network, most preferably by means of SMS and/or MMS. The possibility of generating the message by means of a voice entry advantageously allows a natural voice use of an assistant service according to the invention, in particular such that the user gets the impression to be quasi supported by a true assistant. Advantageously, a voice message gathered by a voice entry is converted into a text message. A voice entry or voice message is advantageously gathered as and/or converted into a text entry or text message either by means of the user's terminal or by means of the service device or by means of a network node of the communication network. Herein, the voice message can be generated by the terminal itself and converted into a text message, for which purpose the terminal comprises corresponding gathering and conversion means. Furthermore, the voice message can be gathered within the scope of a communication connection between the terminal and the service device or the network node of the communication network by means of a corresponding device of the service device or the network node of the communication network and then be converted into a text message by means of a corresponding device. Furthermore, a voice message gathered by the user's terminal can be transmitted to the service device or network node of the communication network via a communication connection and be converted into a text message there. Finally it is possible to transmit a voice message gathered by a terminal, which voice message has been converted into a text message by means of the terminal, to the service device or the network node of the communication network via a communication connection.

Advantageously, the reply is sent via the communication network to the terminal in process step g) by means of a message service of the communication network, preferably by means of SMS and/or MMS.

For the technical solution of the initially mentioned problem, the present invention proposes a service device in a communication network, preferably a mobile network according to a GSM, GPRS and/or UMTS radio network standard, which service device is at least partially involved in an at least partially automatised provision of information, in particular service information and/or advertising information for goods and/or services for the use by means of a terminal operable in the communication network, which service device is designed and/or adapted to at least partially carry out a method according to the invention.

For the technical solution of the initially mentioned problem, the present invention furthermore proposes a terminal to be operated in a communication network, preferably a mobile network according to a GSM, GPRS and/or UMTS radio network standard, which terminal is designed and/or adapted to at least partially carry out a method according to the invention.

Other details, characteristics and advantages of the invention will be explained in detail in the following by means of the exemplary embodiment represented in the figure of the drawing. Herein:

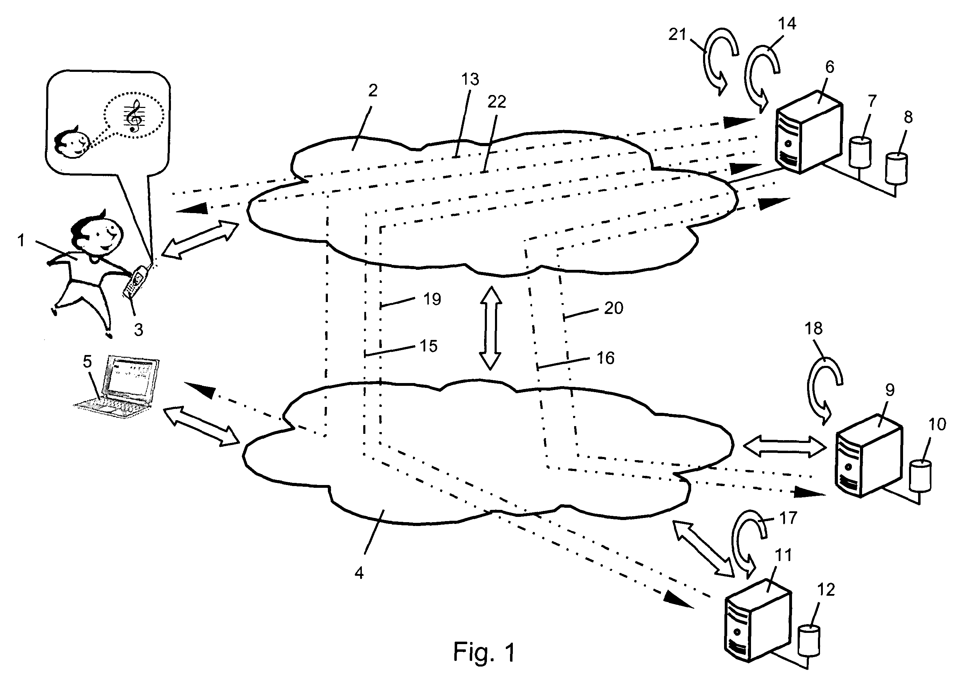

- Fig. 1: is a schematic diagram showing an exemplary embodiment of a provision of information according to the invention.

In the present case, a user 1 of the assistant service according to the invention comprises a mobile terminal 3 in form of a mobile phone 3 operable in a mobile network 2 according to a GSM, GPRS and/or UMTS radio network standard. The mobile network 2 is symbolically represented by a cloud in fig. 1. The mobile network 2 comprises different devices and/or systems forming or realizing the mobile network 2, of which one service device 6 that is involved in the execution of the method according to the invention is exemplarily represented in Fig. 1. The operation of the mobile phone 3 in the mobile network 2 is symbolically represented in fig. 1 by the transparent double arrow between the mobile phone 3 and the mobile network 2. Furthermore, the user 1 comprises a computer 5 in form of a notebook 5 operable in the internet 4. The internet 4 is symbolically represented in fig. 1 by a cloud. The internet 4 comprises different devices and/or systems forming or realizing the internet 4, of which only two database or search machine units 9 and 11 of third providers that are operable in the internet 4 are exemplarily represented in fig. 1. The operation of the notebook 5 in the internet 4 is symbolically represented in Fig. 1 by the transparent double arrow between the notebook 5 and the internet 4. The operation of the database or search machine unit 9 and 11 in the internet 4 is symbolically represented in Fig. 1 by the transparent double arrow between the database or search machine units 9 and 11 and the internet 4. The mobile network 2 and the internet 4 are connected to each other by means of so called gateways (symbolically represented in fig. 1 by the transparent double arrow between the mobile network 2 and the internet 4).

The user 1 generates a message containing individualized information by means of his mobile phone 3 and sends this one via the mobile network 2 to the service device 6. Herein, the message containing the individualized information of the user 1 can be generated in the present case as a text message or as a voice message. The user 1 exemplarily enters via his mobile phone 3 the message containing individualized information that he "has to reserve a car for the trip to Munich on March 15". In the present case, the message is entered as voice message by the user 1 (symbolically represented in fig. 1 by the balloon). In the present case, the voice message is transmitted in the process step referenced by 13 via the mobile network 2 to the service device 6, which converts the voice message into a text message (Voice to Text). The corresponding text message is gathered by memorizing it in a database or memory device 7 or 8 of the service device 6. The words contained in the gathered message will then be automatically indexed by means of the service device 6 and key words will be automatically determined on the base of the indexed words. Afterwards, the service device 6 at least generates one search inquiry, in the present case for example an inquiry with respect to hiring a car for a trip to Munich on March 15, in an automatised manner using at least a part of the determined key words. Herein, advantageously user individual preconditions and/or preferences will be considered within the scope of the search inquiry. Advantageously, the search inquiry will be made anonymous with respect to the user when said search inquiry is generated. The process steps carried out by means of the service device 6 are symbolically represented in fig. 1 by the transparent arrow 14 referenced by the reference numeral 14.

In the present case, the service device 6 sends the at least one generated search inquiry to the database or search machine units 9 or 11 in the process steps referenced by 15 or 16. The database or search machine units find replies or results with respect to the search inquiries in their data stocks 10 or 12. The process step of finding replies or results is symbolically represented in fig. 1 by the transparent arrow 17 or 18. The found replies or results will then be transmitted from the database or search machine units 9 or 11 to the service device 6 in the process steps referenced by 19 or 20 in fig. 1.

The obtained replies will be advantageously edited in consideration of user individual preconditions and/or preferences of the user 1 (symbolically represented by the transparent arrow 21 in fig. 1). In the process step referenced by 22 in fig. 1, the edited replies will then be transmitted in a reply message from the service device 6 via the mobile network 2 as MMS to the mobile phone 3 of the user 1 and via the internet 4 as e-mail to the notebook 5 of the user 1. The transmission of the reply message to the mobile phone 3 of the user 1 and/or the notebook 5 of the user 1 can be advantageously predefined by the user 1 in the present case.

The user 1 himself can advantageously reply again to a reply message or the contents thereof, which is correspondingly received by his respective terminal (mobile phone 3 or notebook 5) and thus for example react to offers determined with respect to hiring a car and realize the hiring. Herein, an especially advantageous embodiment of the method according to the invention provides that goods or services which are correspondingly shopped via the service device 6 will be accounted by the provider of the mobile network 2.

The exemplary embodiments of the invention represented in the figure of the drawing and described in connection with this one only serve for explaining the invention and are not limiting for this one.

### List of reference numerals:

- 1: user
- 2: mobile network
- 3: mobile terminal/mobile phone
- 4: internet
- 5: computer/notebook
- 6: service device (assistant service)
- 7: database/memory device
- 8: database/memory device
- 9: database or search machine unit
- 10: database/memory device
- 11: database or search machine unit
- 12: database/memory device
- 13: process step
- 14: process step
- 15: process step
- 16: process step
- 17: process step
- 18: process step
- 19: process step
- 20: process step
- 21: process step
- 22: process step

## Claims

1. A method for the at least partially automatised provision of information, in particular service information and/or advertising information for goods and/or services for the use by a terminal operable in a communication network,
**characterized by** the following process steps carried out by a service device of the communication network:
a) gathering at least one message containing individualized information of a user;
b) indexing the words contained in the gathered message;
c) determining key words by means of the indexed words;
d) generating at least one search inquiry using at least a part of the determined key words;
e) sending the search inquiry to at least one database unit and/or at least one search machine unit;
f) receiving at least one reply to the search inquiry
g) sending at least one reply to at least one terminal of the user.

2. A method according to claim 1, **characterized in that** a search inquiry that is anonymous with respect to the user is generated in process step d).

3. A method according to claim 1 or claim 2, **characterized in that** the search inquiry is generated in consideration of user individual preconditions and/or preferences.

4. A method according to one of the claims 1 through 3, **characterized in that** a search inquiry that allows a semantic search is generated, preferably a search inquiry in a RDF, XML and/or OWL format.

5. A method according to one of the claims 1 through 4, **characterized by** a selection of the database unit and/or the search machine unit in consideration of preconditions and/or preferences of the service device and/or the user.

6. A method according to one of the claims 1 through 5, **characterized in that** the service device comprises at least one administrable interface for the connection of database units and/or search machine units.

7. A method according to one of the claims 1 through 6, **characterized in that** the replies received in process step f) are edited and at least one edited reply is sent to a terminal of the user in process step g).

8. A method according to claim 7, **characterized in that** within the scope of the edition of received replies, a filtering of the replies with respect to user individual preconditions and/or preferences is carried out.

9. A method according to one of the claims 1 through 8, **characterized in that** the message containing individualized information is generated by a voice entry by means of the terminal of the user and/or by a text entry by means of the terminal of the user and is sent by the terminal via the communication network to the service device for being gathered by the service device according to process step a), preferably by means of a message service of the communication network.

10. A method according to claim 9, **characterized in that** a voice message gathered by voice entry is converted into a text message.

11. A method according to one of the claims 1 through 10, **characterized in that** the reply is sent via the communication network to the terminal in process step g) by means of a message service of the communication network.

12. A method for the at least partially automatised provision of information, in particular service information and/or advertising information for goods and/or services for the use by a terminal operable in a communication network,
**characterized by** the following process steps carried out by a terminal of a user:
a) generating at least one message containing individualized information;
b) sending the message to a service device of the communication network;
c) receiving at least one replay message from the service device.

13. A service device in a communication network, preferably a mobile network according to a GSM, GPRS and/or UMTS radio network standard, which service device is at least partially involved in an at least partially automatised provision of information, in particular service information and/or advertising information for goods and/or services for the use by means of a terminal operable in the communication network, **characterized in that** the service device is designed and/or adapted to at least partially carry out a method according to one of the claims 1 through 12.

14. A terminal to be operated in a communication network, preferably a mobile network according to a GSM, GPRS and/or UMTS radio network standard,
**characterized in that** the terminal is designed and/or adapted to at least partially carry out a method according to one of the claims 1 through 12.
